(19) Europäisches Patentamt
European Patent Office
Office européen des brevets

(11) Publication number: 0 305 048 A2

# (12) EUROPEAN PATENT APPLICATION

(21) Application number: 88306752.2

(51) Int. Cl.4: C08F 218/18 , G02B 1/04

(22) Date of filing: 22.07.88

(30) Priority: 27.08.87 AU 3998/87

(43) Date of publication of application: 01.03.89 Bulletin 89/09

(84) Designated Contracting States: DE FR GB IT

(71) Applicant: SOLA INTERNATIONAL HOLDINGS, LTD.
Sherriffs Road
Lonsdale Morphett Vale South Australia 5162(AU)

(72) Inventor: Toh, Huan Kiak
5 Platina Court
Flagstaff Hill South Australia(AU)

(74) Representative: Pendlebury, Anthony et al
Page, White & Farrer 5 Plough Place New Fetter Lane
London EC4A 1HY(GB)

## (54) Improvements in or relating to lenses and lens blanks made from a polymeric co-polymer.

(57) A casting composition including

(a ) approximately 75 to 85% by weight based on the total weight of components (a), (b) and (c) of diallyl phthalate;

(b) approximately 10 to 15% by weight based on the total weight of components (a), (b) and (c) of benzyl methacrylate; a

(c) approximately 5 to 15% by weight based on the total weight of components (a), (b) and (c) of bisphenol-A dimethacrylate of the general formula

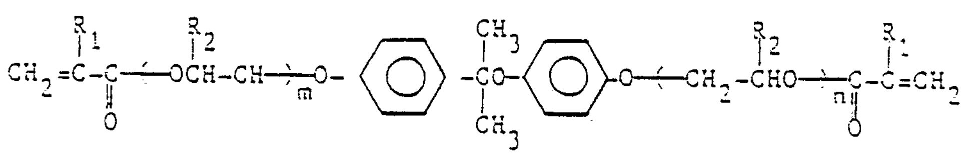

wherein $R_1$ and $R_2$, which may be the same or different, signify a hydrogen atom or a methyl radical, and m an n each independently represent 0 or 1.

These compositions are useful for making lens blanks and lenses having a refractive index equal to or higher than 1.56.

EP 0 305 048 A2

# IMPROVEMENTS IN OR RELATING TO LENSES AND LENS BLANKS MADE FROM A POLYMERIC CO-POLYMER

The present invention relates to lenses and lens blanks particularly for ophthalmic use made from polymeric co-polymers which have a refractive index equal to or higher than 1.56 when co-polymerised.

For well over 40 years, the organic polymer used in the manufacture of lenses and lens blanks has been the polymer formed by the free radical polymerisation of diethylene glycol bis-allyl carbonate (DGBC). This material when in the monomeric state is a viscous liquid and can be formed into lenses by a casting process in a space formed in a mould assembly which comprises two moulds held together with a spring clamp and having a gasket to seal the gap at the periphery of the moulds.

Polymerisation is then carried out by heating the mould assembly. Lenses made from such a material have a relatively good surface hardness, are stable to solvents, and have a good heat and impact resistance. They are also not subject to yellowing. Such lenses provide the lightweight, safety, and resistance to breakage which lenses made from inorganic glasses do not possess. In addition, tinted lenses can be produced simply by dyeing the lines.

One desired improvement is to produce a material which will enable lenses to be cast with all of the present attributes of the lenses made from DGBC but with an increased refractive index and a comparable dispersion. An increased refractive index is desirable since this permits the casting of a thinner lens. The dispersion should be at least comparable with DGBC so that the dispersion is sufficiently high to avoid development of color aberration with may occur in certain lenses.

DGBC when polymerised has a refractive index of 1.499 and a V number of 58. No single material has been found which is satisfactory. Both polystyrene and polycarbonates which have a refractive index of about 1.59 are inferior to DGBC in scratch resistance and have dispersion characteristics (V number of about 30) which makes them unsuitable for prescription lenses. Attention in the prior art has therefore been directed to co-polymers containing two or more components so as to formulate compositions with all or substantially all the desired advantages of DGBC.

We have examined many of the formulations disclosed in the prior art and have found none that provide the desired combination of properties. In particular it is a fundamental requirement for use of the polymers as lenses, that the co-polymerisation of two or more materials produces a homogeneous material with no phase inhomogeneity. We have found that any inhomogeneity contributes to a reduction in optical performance, abrasion resistance and heat stability. The presence of inhomogeneity can be demonstrated using a polariscope. Lenses without satisfactory optical homogeneity show, under polariscope analysis, birefringence and a variation of refractive index within a lens. The wearer can also experience signs of aberration with some eye discomfort. It is also important to ensure that the lenses, when being removed from the moulds on mould opening, have sufficient strength to resist splitting.

The use of mixtures of diallyl isophthalate (DAIP) and benzyl methacrylate (BZMA) in which DAIP is the main component has been disclosed in GB Patent Specification No. 2980523B. A further GB Specification No. 2034721B discloses the use of mixtures of BZMA and ethoxylated bisphenol-A dimethacrylate (BPDMA). We have found that lenses made from such two component compositions (see comparative examples below) are unsatisfactory for sale because while they provided lenses with the desired refractive index and dispersion, their abrasion resistance, opening strength and heat stability are unacceptable.

It is accordingly an object of the present invention to overcome, or at least alleviate one or more of the difficulties related to the prior art.

Accordingly in a first aspect of the present invention there is provided a casting composition including

(a) approximately 80 to 85% by weight based on the weight of components (a), (b) and (c) of a diallyl phthalate;

(b) approximately 10 to 15% by weight based on the weight of components (a), (b) and (c) of benzyl methacrylate and

(c) approximately 5 to 10% by weight based on the weight of components (a), (b) and (c) of a bisphenol-A dimethacrylate of the general formula

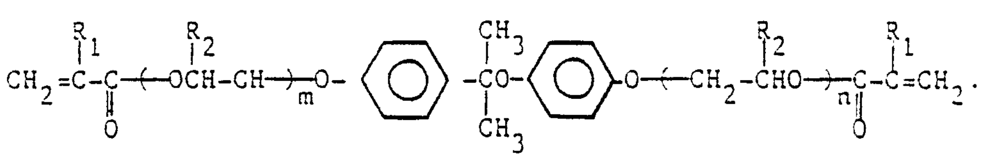

wherein $R_1$ and $R_2$, which may be the same or different, signify a hydrogen atom or a methyl radical, and m and n each independently represent 0 or 1.

In a further aspect, the present invention relates to an optical article formed from the casting composition described above.

The three component monomer formulations utilising a diallyl phthalate (DAP), bisphenol-A dimethacrylate (BPDMA), and benzyl methacrylate (BZMA) can be formed into lenses whose inherent properties and behaviour in further processing is considerably superior to existing commercially available high index lenses. Optical lenses from the casting composition have a refractive index equal to or higher than 1.56, preferably 1.570. More preferably, the optical lens has a V number of at least approxiamtely 35.

In a preferred aspect of the present invention the bisphenol-A dimethacrylate has the formula

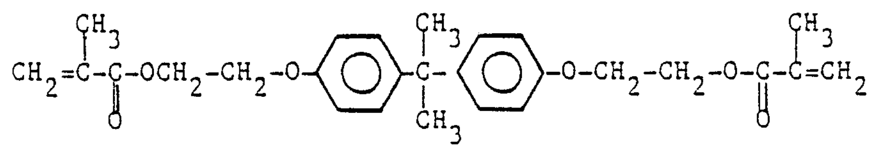

The weight ratio of to bisphenol-A dimethacrylate (BPDMA) to Benzyl methacrylate (BZMA) is preferably less than approximately 1.5 more preferably approximately 0.33 to 1.0.

The balance of the casting composition, if any, may include up to approximately 25% by weight, preferably up to approximately 10% by weight, of compatible components selected from additives and compatible co-monomers. Additives may be selected from U.V. absorbers, anti-static agents and other forms of stabiliser. Such materials usually do not exceed 0.5%, provided they do not interfere with the optical homogeneity of the finished lens. Compatible co-monomers include styrene, chlorostyrene, allyl benzoate, tri-allyl isocyanurate, butyl methacrylate, polyethylene glycol dimethacrylate, diethylene glycol bis-allyl carbonate.

We have found that outside the ranges of components of the casting composition according to of the present invention, a final co-polymer is obtained with defects which render it unsuitable for use in the manufacture of optical articles, preferably lenses. Problems are experienced due to inhomogeneity in polymerisation as the composition moves towards 75% and below, diallyl phthalate, preferably diallyl isophthalate (DAIP). Similarly, as the composition moves towards 100% benzyl methacrylate, difficulties are experienced in casting lenses and lens blanks such as separation and high adhesion, which results in low yields of good lenses. Also, the heat distortion properties of the lens become unacceptable. As the composition moves toward a high proportion of BPDMA, i.e. in excess of 15%, the yellowness of the co-polymer increases to an unacceptable level which is not controllable with additives and the degree of uniformity of tinting of a finished lens becomes unacceptable.

The casting composition including BPDMA, DAIP and BZMA in proportions in accordance with the invention may provide, in addition to the required refractive index and V number, a satisfactory optical homogeneity. The lens formed from said composition of polymers is provided with a sufficient hardness, and with a final strength and adhesion at mould removal which avoids an unacceptable level of splitting and separation. The lenses are also capable of withstanding the temperatures experienced during such secondary processing as anti-reflection coating. Moreover, because of their hardness, the lenses have a uniform tintability and are satisfactory for subsequent hardness and anti-reflection coatings. Such coatings exhibit good adherence quality. Importantlly, the hardness of the lenses means that they have sufficient scratch resistance to avoid damage during handling prior to coating.

U.V. absorbers may be present such as 2- (2′-hydroxy-5′ methyl phenyl) benzotriazole. The amounts of such materials are such as not to hinder polymerisation or curing.

Polymerisation and curing of the casting composition may be initiated by any conventional co-polymerisation initiator such as e.g. the addition of a mixture of diisopropyl peroxydicarbonate, optionally in admixture with benzoyl peroxide. The co-polymerisation initiator may be present in amounts of 0 to approximately 10% by weight based on the total weight of the casting composition.

To form the casting composition into a lens the chosen combination of the three monomers and any additivies are mixed with the initiator to form a casting liquid. This is then used to fill a casting mould formed e.g. from two glass moulds assembled together with a gasket to seal the casting cavity. The assembled and filled mould is then placed in a hot air oven and cured. After removal from the oven, the mould assembly is opened and the lens removed, and further heated at a higher temperature than in the oven to carry out the operation known as post-curing.

In a further preferred aspect of the present invention, the co-polymerisation initiator may be introduced in to the casting composition in admixture with a compatible co-monomers. Accordingly the casting composition according to this aspect of the present invention may further include:
an initiator - co-monomer pre-mix composition including
approximately 0 to 25% by weight based on the total weight of the casting composition of at least one compatible co-monomer selected from styrene, chlorostyrene, allyl benzoate, tri-allyl isocyanurate, butyl methacrylate, polythylene glycol dimethacrylate, diethylene glycol bis-allyl carbonate: and
0 to approximately 10% by weight based on the total weight of the casting composition of a co-polymerisation initiator.

In a preferred form the at least one compatible co-monomer may be present in amounts of from approximately 20 to 25% by weight. The at least one compatible co-monomer may be diethylene glycol bis-allyl carbonate. The co-polymerisation initiator may be diisopropyl peroxydicarbonate. It has been found that with this initiator - co-monomer pre-mix composition, whilst some refractive index reduction may occur e.g. to a level of approximately 1.55, impact strength and/or abrasion resistance may increase. More importantly, yellowness may be reduced in the final optical lens product.

The present invention will now be more fully described with reference to the accompanying examples. It should be understood, however, that the description following is illustrative only and should not be taken in any way as a restiction on the generality of the invention described above. Examples 3 to 6 and 22 to 24 illustrate but do not limit the invention.

Percentages or parts are by weight. The various properties of the lenses made were measured by the following methods:

| | | |
|---|---|---|
| Colour | ) | Both yellowness and light |
| | ) | transmission were measured |
| Light | ) | using a Gardner Colorimeter |
| Transmission | ) | |

The light transmission of all lenses are in the range 90-91%. Lenses described as unacceptable for colour had a yellowness index greater than 1.2 for a 2mm lens thickness. Yellowness index level is measured according to ASTM D 1925-70.

Optical Homogeneity

All finished lenses were exained under a polariscope and were classified as acceptable if no irregular lines or patterns are observed which cannot be explained by the geometry of the lens.

Resistance Against Heat Distortion (HD in Table 1)

The ability of the lenses to resist heat distortion was measured using a Vicat type heat distortion apparatus. A lens was classified as acceptable if it is equal to or better than a corresponding CR 39 lens. All tests were at 70° C, and carried out under a fixed load.

Casting Performance

This was assessed "good" if there is no difficulty in opening the mould, little or no blank separation from the mould, and no excessive adhesion leading to damage to the mould surface. Separation means that the lens has separated from the lens surface before opening. The lens should also not be physically damaged on opening i.e. there should be no splits, cracks or fractures.

Tintability

The ability of a lens to be tinted was checked by measuring the percentage light transmission through the tinted lens and a CR 39 lens tinted at the same time. Good tintability means the lens has been tinted to the same level or almost the same level as the CR 39 lens. All lenses are immersed in an aqueous dispersion of a dyestuff at 85 to 90° C and held depending on the desired level of dyeing for between 5 and 20 minutes.

Heat splits

The ability of the lens to withstand heat treatment without splitting or cracking. This is important in secondary processing methods such as in anti-reflection coating or abrasion resistant coating. The test is carried out in a hot air oven for 3 hous at 120° C.

Example 1 (No.6 in Table 1)

A mixture of 8- parts diallyl isophthalate, 10 parts of benzyl methacrylate and 10 parts of an ethoxylated bisphenol-A dimethacrylate having the structure of formula I where n = 1(ATM20M) together with 0.05 parts of 2(2′-hydroxy-5′methyl phenyl) benzotriazole and 2.0 parts IPP (diisopropyl peroxydicarbonate) was poured into a casting mould composed of a glass mould for shaping the lens having a diameter 70cm and a rubbery gasket, and was held for 21 hours in a hot air oven the temperature rising from an initial 40° to 90° C finally. The lens was removed from the mould and further heated for 2 hours at 100° C.

The lens was examined under a polariscope for homogeneity and stress lines. The yellowness index and percentage light transmission were measured with a Gardner Colorimeter. These together with other properties are summarised in Table 1.

Example 2 (No. 20, 21 in Table 1)

Lenses having various composition were prepared by the same method as in Example 1, and examined under the same test methods. The results are shown in Table 1.
(All lenses have refractive indices around 1.569-1.570 and light transmission 89-91%).

The proportion of components in the co-polymer used in forming the lenses are given in Table 1 in the order DAIP, BM and BPDMA in Examples 1 to 19 and 22 to 24, where BPDMA is a formula I where n = 1. In the cases of examples 20 and 21 the proportion of components is given as DAIP, BM and the third component is as formula I but m and n = 2, and m + n = 4. In the table below X indicates unacceptable level, 0 acceptable level.

It will be seen that of the examples given above only 3 to 6 and 22 to 24 are examples of the invention and are the only examples to show the formulation of a co-polymer which can be used to manufacture a lens which can be made in satisfactory yields, and with a performance equivalent to DGBC. The remaining examples other than examples 20-21 demonstrate that it is not possible to simply formulate the co-polymer from a mixture of components in which DAIP is the main component, and the other two components are simply in a partcular ratio one to another.

Examples 20 to 21 demonstrate that the choice of a particular bisphenol-A dimethacrylate is also critical for success.

Example 3 (Examples 22 to 24 in Table 1)

Examples 22 to 24 illustrate the inclusion of compatible co-monomers as follows:

Lenses having various compositions were prepared by the same method as Example 1, and examined under the same test methods. The results are shown in Table 1.

Base for monomer mix from Example (4) is used, 5% by weight of the following are added:
(22 diethylene glycol bis-allyl carbonate
(23) polyethylene glycol dimethacrylate with 9 ethylene oxide units
(24) polyethylene glycol dimethacrylate with 14 ethylene oxide units.

TABLE 1

| Example | Proportion of Components (DAIP/BMK/BPDMA) | Ratio of BPDMA:BM | Colour | R1 | %T | Barcol | HD | Casting Performance | Optical Homogeneity | Heat Splits | Tintability |
|---|---|---|---|---|---|---|---|---|---|---|---|
| 1 | 100/0/0 | 0 | X | 1.568 | 89 | 40 | O | X | O | O | O |
| 2 | 90/10/10 | 1 | X | | | | | O | O | O | O |
| 3 | 85/105 | .5 | O | 1.570 | 90 | 30 | O | O | O | O | O |
| 4 | 82.5/12.5/5 | .4 | O | 1.570 | 90 | 28 | O | O | O | O | O |
| 5 | 80/15/5 | .3 | O | 1.570 | 90 | 28 | O | O | O | O | O |
| 6 | 80/10/10 | 1 | O | 1.570 | 91 | 26 | O | O | O | O | O |
| 7 | 80/20/0 | 0 | O | 1.570 | 90 | 31 | X | X | O | O | O |
| 8 | 80/0/20 | - | X | 1.562 | 90 | 27 | O | O | O | X | O |
| 9 | 75/10/15 | 1.5 | O | 1.568 | 91 | 23 | O | X | X | X | O |
| 10 | 75/15/10 | .7 | O | 1.569 | 91 | 23 | X | X | X | X | O |
| 11 | 75/20/5 | .25 | O | 1.570 | 91 | 26 | X | O | X | O | O |
| 12 | 70/20/10 | .5 | O | 1.570 | 91 | 0 | X | O | O | O | O |

TABLE 1 (contd...)

| Example | Proportion of Components (DAIP/BMK/BPDMA) | Ratio of BPDMA:BM | Colour | R1 | %T | Barcol | HD | Casting Performance | Optical Homogeneity | Heat Splits | Tintability |
|---|---|---|---|---|---|---|---|---|---|---|---|
| 13 | 65/35/0 | 0 | O | 1.571 | 91 | 33 | X | O | X | X | X |
| 14 | 65/0/35 | - | X | 1.569 | 90 | 29 | O | O | O | O | O |
| 15 | 60/30/10 | .3 | O | 1.567 | 91 | 22 | X | X | X | O | X |
| 16 | 60/25/15 | .6 | O | 1.569 | 90 | 28 | X | O | X | O | X |
| 17 | 60/20/20 | 1 | O | 1.567 | 91 | 20 | X | O | X | O | X |
| 18 | 60/10/30 | 3 | O | 1.568 | 91 | 22 | X | O | X | X | X |
| 19 | 50/20/30 | 1.5 | X | 1.569 | 90 | 28 | X | X | X | X | X |
| 20 | 80/10/10* | - | X | 1.568 | 90 | 22 | X | O | O | X | O |
| 21 | 80/15/5* | - | X | 1.567 | 90 | 26 | O | O | X | X | O |
| 22 | 82.5/12.5/5 ** | .4 | O | 1.566 | 91 | 26 | O | O | O | O | O |
| 23 | 82.5/12.5/5 ** | .4 | O | 1.567 | 90 | 24 | O | O | O | O | O |
| 24 | 82.5/12.5/5 ** | .4 | O | 1.565 | 90 | 22 | O | O | O | O | O |

(*BPDMA replaced by tetra ethoxylated bisphenol-A dimethacrylate where m = n = 2)
( ** Polymers contain 5% additional monomers - see Example 3).

## Claims

1. A casting composition including

(a ) approximately 75 to 85% by weight based on the total weight of components (a), (b) and (c) of diallyl phthalate;

(b) approximately 10 to 15% by weight based on the total weight of components (a), (b) and (c) of benzyl methacrylate; a

(c) approximately 5 to 15% by weight based on the total weight of components (a), (b) and (c) of bisphenol-A dimethacrylate of the general formula

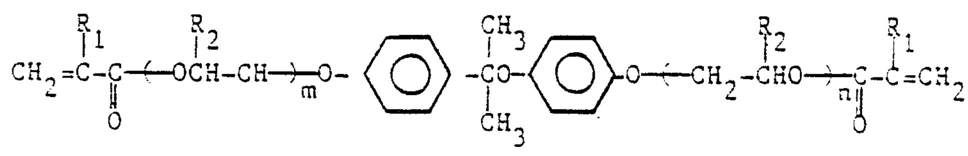

wherein $R_1$ and $R_2$, which may be the same or different, signify a hydrogen atom or a methyl radical, and m an n each independently represent 0 or 1.

2. A casting composition according to claim 1 wherein the diallyl phthalate is diallyl isophthalate.

3. A casting composition according to claim 1 or 2, wherein the weight ratio of bisphenol-A dimethacrylate to benzyl methacrylate is in the range of approximately 0.33 to 1.0.

4. A casting composition according to claim 1, 2 or 3, wherein the bisphenol-A dimethacrylate is of the formula

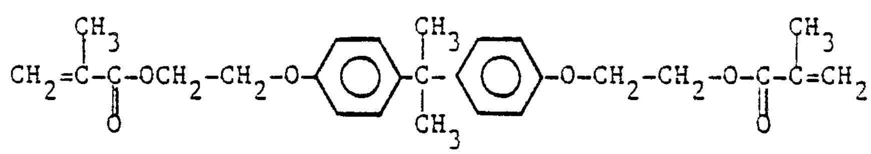

5. A casting composition according to any one of the preceding claims, further including up to 25% by weight based on the total weight of the casting composition of at least one compatible co-monomer selected from styrene, chlorostyrene, allyl benzoate, tri-allyl isocyanurate, butyl methacrylate, polythylene glycol dimethacrylate, diethylene glycol bis-allyl carbonate.

6. A casting composition according to any one of the preceding claims, further including at least one additive selected from U.V. absorbers, anti-oxidants, anti-yellowing agents, anti-static agents and other stabilisers in an amount which does not interfere with the optical homogeneity of the finished product.

7. A casting composition according to any one of the preceding claims further including a co-polymerisation initiator.

8. A casting composition according to claim 7 wherein the co-polymerisation initiator is diisopropyl peroxydicarbonate.

9. A casting composition according to claim 4 further including an initiator - co-monomer pre-mix composition including

0 to approximately 25% by weight based on the total weight of the casting composition of at least one compatible co-monomer selected from styrene, chlorostyrene, allyl benzoate, tri-allyl isocyanurate, butyl methacrylate, polythylene glycol dimethacrylate, diethylene glycol bis-allyl carbonate.

0 to approximately 10% by weight based on the total weight of the casting composition of a co-polymerisation indicator.

10. A casting composition according to claim 9 wherein the initiator - co-monomer pre-mix composition includes approximately 20 to 25% by weight of diethylene glycol bis-allyl carbonate.

0 to approximately 10% by weight based on the total weight of the casting composition of diisopropyl peroxydicarbonate.

11. An optical article formed from a casting composition according to any one of the preceding claims.

12. An optical article according to claim 11 wherein the optical article is an optical lens.

13. An optical lens having a refractive index equal to or higher then 1.56 said optical lens being formed from a casting composition including

(a) approximately 80 to 85% by weight based on the total weight of components (a), (b) and (c) of diallyl phthalate;

(b) approximately 10 to 15% by weight based on the total weight of components (a), (b) and (c) of benzyl methacrylate; a

(c) approximately 5 to 15% by weight based on the total weight of components (a), (b) and (c) of bisphenol-A dimethacrylate of the general formula

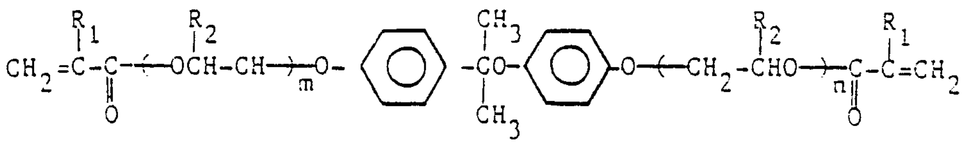

wherein $R_1$ and $R_2$, which may be the same or different, signify a hydrogen atom or a methyl radical, and m an n are integers with a value between 0 and 1.

14. An optical lens according to claim 13 having a V number of at least approximately 35.